# EUROPEAN PATENT SPECIFICATION

(11) **EP 0 927 513 B1**
(45) Date of publication and mention of the grant of the patent: **13.06.2001**
(21) Application number: 96929538.5
(22) Date of filing: 05.09.1996
(51) Int. Cl.: A01G 1/06

(54) **METHOD AND DEVICE FOR GRAFTING SEEDLINGS**
VERFAHREN UND VORRICHTUNG ZUM PFROPFEN VON PFLANZLINGEN
PROCEDE ET DISPOSITIF DE GREFFAGE DE PLANTULES

(43) Date of publication of application: 07.07.1999
(73) Proprietor: YANMAR AGRICULTURAL EQUIPMENT CO., LTD., Osaka-fu 530-0013 (JP)
(72) Inventor: BUNO, Setsuo Yanmar Agricultural Equipment Co. Ltd, Osaka-shi Osaka 530 (JP); YAMADA,Hisaya Yanmar Agricultural Equipment Co.Ltd, Osaka-shi Osaka 530 30 (JP); KOGA, Haruo Yanmar Agricultural Equipment Co., Ltd, Osaka-shi Osaka 530 (JP)
(74) Representative: Bayliss, Geoffrey Cyril
(86) International application number: JP9602528
(87) International publication number: WO9809501

(56) References cited:
- EP-A- 0 654 212
- JP-A- 6 007 035
- JP-A- 7 000 051
- JP-A- 8 056 485

## Description

### TECHNICAL FIELD

The present invention relates to a method and an apparatus for grafting saplings wherein a cut face of a stock sapling stem is fixedly joined to a cut face of a scion sapling stem.

### PRIOR ART

Conventionally, a grafting method is known in which the stem of a stock sapling and the stem of a scion sapling are joined at their respective oblique cut faces and fixed by a clip, as disclosed in JP-A-2-107125, JP-A-4-187209 and JP-A-4-304817.

According to the conventional grafting method, the stem of a scion sapling is clamped by a scion clamp means and is cut obliquely under the scion clamp means. On the other hand, the stem of a stock sapling is clamped by a stock clamp means, and in this state the stem of the stock sapling is cut obliquely above the clamp means. Subsequently, the scion clamp means and the stock clamp means are moved relative to each other to join the stem of the scion sapling to the stem of the stock sapling at the respective oblique cut faces. Then, the joint is fixed by a clip.

However, since the respective stems are clamped by the scion clamp means and the stock clamp means at a position remote from the respective cut races, it is difficult to linearly align the stems at the joint when both of the clamp means are moved relative to each other for stem joining the stems, consequently making it difficult to join the cut faces. Further, the stems are not necessarily linear and are likely to bend particularly near the cut faces. Furthermore, since the clip approaches the stems perpendicularly thereto for nipping, the cut faces of the respective stems are likely to separate at the joint during approaching movement of the clip and/or clipping action. If the stems are nipped and joined with the cut faces separated at the joint, the grafting adhesion at the joint becomes poor.

To overcome such a problem, EP-A-0654212 proposes the provision of a seedling press member for backing up the stem of a cut scion sapling and the stem of a cut stock sapling at the time of joining them, thereby improving the linearity of both stems for joining. However, nothing is provided for backing up the cut portions of both stems at the time of joining, hence there is still a possibility that the cut faces of the stem may separate from each other before being joined together.

### DISCLOSURE OF THE INVENTION

The present invention, which has been conceived in view of the above problems, aims to provide a method and an apparatus for grafting a sapling in which the respective stems of a scion sapling and a stock sapling can be fixed by a clip without causing separation of the joining faces of the respective stems.

According to a first aspect of the present invention, there is provided a method of grafting a sapling comprising: a step of clamping a stem of a scion sapling with a scion sapling clamp means; a step of cutting the clamped stem of the scion sapling below the scion sapling clamp means; a step of clamping a stem of a stock sapling with a stock sapling clamp means; a step of cutting the clamped stem of the stock sapling above the stock sapling clamp means; a step of moving the scion sapling clamp means and the stock sapling clamp means relative to each other to join a cut face of the stem of the scion sapling to a cut face of the stem of the stock sapling; a step of causing a clip to approach the stems transversely to a longitudinal axis thereof for fixing the joint of the stems; a step of causing a posture control means to approach the stems in opposition to a clip approaching direction; and a step of bringing the posture control means into engagement with both of the stems at the joint to regulate the joint in posture.

The above method is advantageous in that, at the time of fixing the joint with the clip, the posture control means comes into engagement with both of the stems at the joint for preventing inconveniences such as separation of the joining faces due to bending of the stems. Accordingly, it is possible to reliably fix the joint with the clip, thereby enhancing the grafting adhesion.

Preferably, the clip is formed with a groove for receiving a tip of the posture control means, and the step of fixing the stems with the clip is performed after the step of regulating the posture of the joint. In this case, the groove allows the tip of the posture control means and the tip of the clip to be positioned very close to each other when the posture control means regulates the posture of the join. Further, it is also advantageous that the posture control means does not hinder fixing of the joint with the clip.

According to a second aspect of the present invention, there is provided an apparatus for grafting a sapling comprising: a scion sapling clamp means for clamping a stem of a scion sapling; a cutting means for cutting the clamped stem of the scion sapling below the scion sapling clamp means; a stock sapling clamp means for clamping a stem of a stock sapling; a cutting means for cutting the clamped stem of the stock sapling above the stock sapling clamp means; a transfer means for moving the scion sapling clamp means and the stock sapling clamp means relative to each other to join a cut face of the stem of the scion sapling to a cut face of the stem of the stock sapling; a clip feed means for causing a clip to approach the stems transversely to a longitudinal axis thereof for fixing the joint of the stems; and a posture control means to approach the stems in opposition to a clip approaching direction and to engage both of the stems at the joint.

With the above grafting apparatus, the stems of the scion sapling and the stock sapling are held by the respective clamp means in advance and are cut at a predetermined portion by the respective cutting means for facilitating joining of the stems at the cut faces. Further, the engagement of the posture control means with the back side of both stems at the joint prevents separation of the cut faces due to bending of the stems . In this state, if the stems are fixedly nipped by the clip approaching the stems from the opposite side of the posture control means, the stems can be linearly aligned while preventing separation of the cut faces. Thus, the joining area for the cut faces does not reduce, and the grafting adhesion does not lower.

The posture control means may be operated to approach the joint of the stems into engagement therewith from behind before fixing with the clip, and retreat from a tip of the clip after fixing with the clip. Thus, the posture control means does not hinder movement of the respective clamp means.

The posture control means may comprise a plate having a flat surface for engaging the joint of the stems from behind. In this case, the posture control means in the form of the plate need only to move horizontally, namely perpendicularly to the longitudinal direction of the stems (vertical direction), for bringing the vertical flat surface of the plate into engagement with the back side of the stems, thereby holding the stems in a line.

Further, the clip may have a tip formed with a groove for avoiding interference with the posture control means when the posture control means comes into engagement with the joint of the stems from behind. In this case, the groove allows the clip and the posture control means to be located in close proximity or partially overlapped. Accordingly, the posture control means can engage the back side of the stems up to the last stage of the clip-fixing operation, thereby enhancing the grafting adhesion.

Moreover, the tip of the clip may comprise a pair of stem nipping heads for clamping the joint of the stems, and each of the stem nipping heads may be formed with a forwardly open groove for avoiding interference with the posture control mean. In this case, the pair of stem nipping heads at the tip of the clip can be located close to the stems until the posture control means shaped in the form of the plate is fitted in the groove for laterally nipping both of the stems over the joint at the same time. As a result, the stems can be fixed to prevent separation of the joint, thereby additionally improving the grafting adhesion.

Other features and advantages of the present invention will become clearer from the detailed description of the preferred embodiments given with reference to the accompanying drawings.

### BRIEF DESCRIPTION OF THE DRAWINGS

Fig. 1 is a schematic plan view showing a grafting apparatus embodying the present invention.

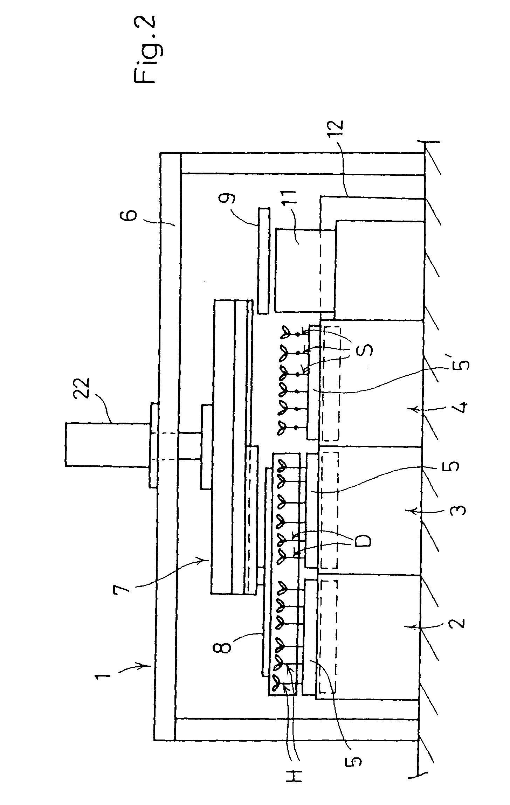

Fig. 2 is a schematic front view showing the same grafting apparatus.

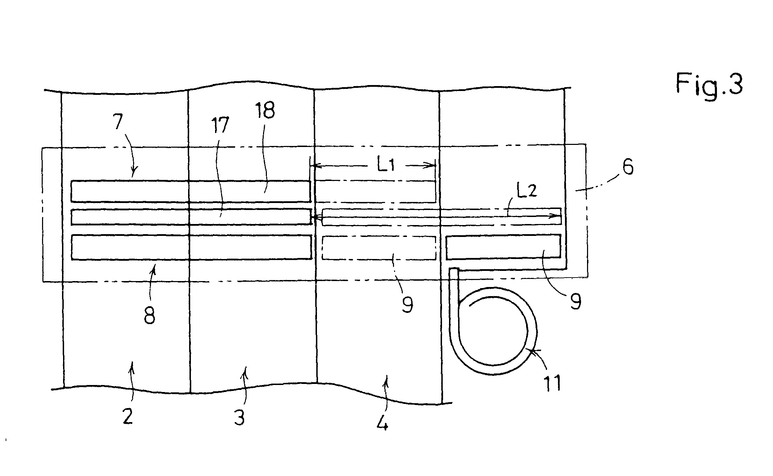

Fig. 3 is a view illustrating the ranges of movement of a clamp transfer mechanism, a cutting mechanism and a clip transfer mechanism, respectively, at a gate-like frame.

Fig. 4 is a side view showing the clamp transfer mechanism and the cutting mechanism.

Fig. 5 is a plan view, partially cut away, showing the clamp transfer mechanism and the cutting mechanism.

Fig. 6 is a front view, partially cut away, showing a lower transfer frame and a lower clamp means.

Fig. 7 is a perspective view showing the lower transfer frame and the lower clamp means.

Fig. 8 is a fragmentary perspective view showing a principal portion of the cutting mechanism.

Fig. 9 is a fragmentary enlarged sectional view showing relative positions of the relevant parts in cutting a stem.

Fig. 10 is a sectional view showing the clip transfer mechanism taken along lines X-X in Fig. 11.

Fig. 11 is a side view along lines XI-XI in Fig. 10.

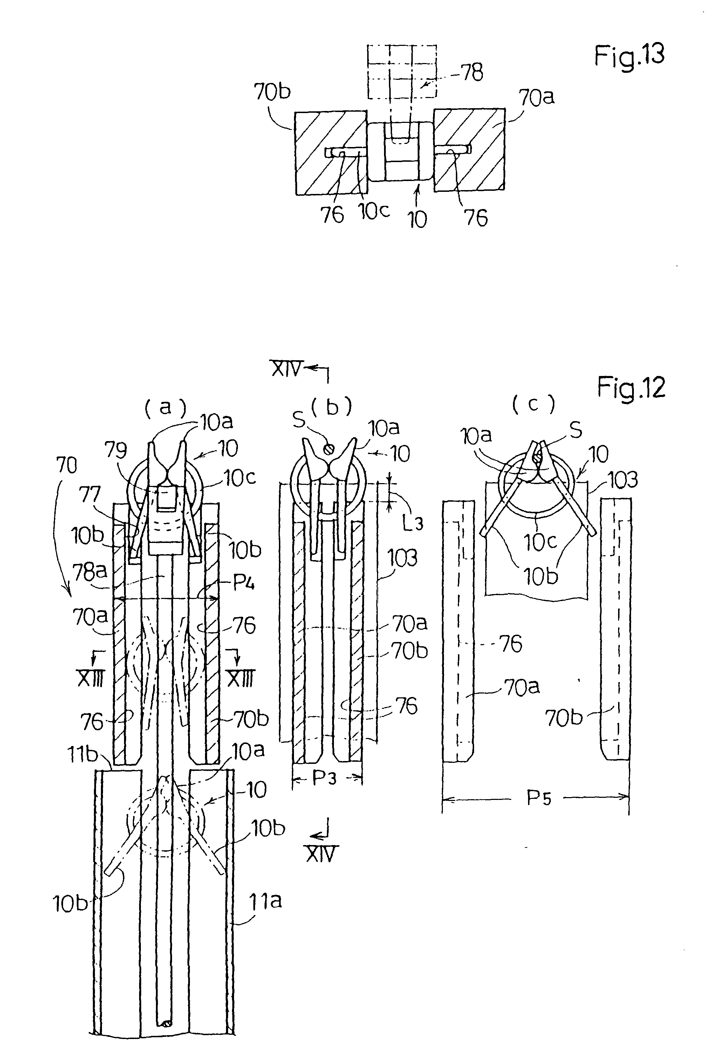

Fig . 12 (a) is a plan view showing the manner of transferring a clip from a clip feeder to a clip holder; Fig. 12 (b) is a plan view showing the state in which a pair of stem-nipping portions is open; and Fig. 12 (c) is a plan view showing the state in which the stem is nipped by the clip.

Fig. 13 is an enlarged sectional view taken along lines XIII-XIII in Fig. 12 (a).

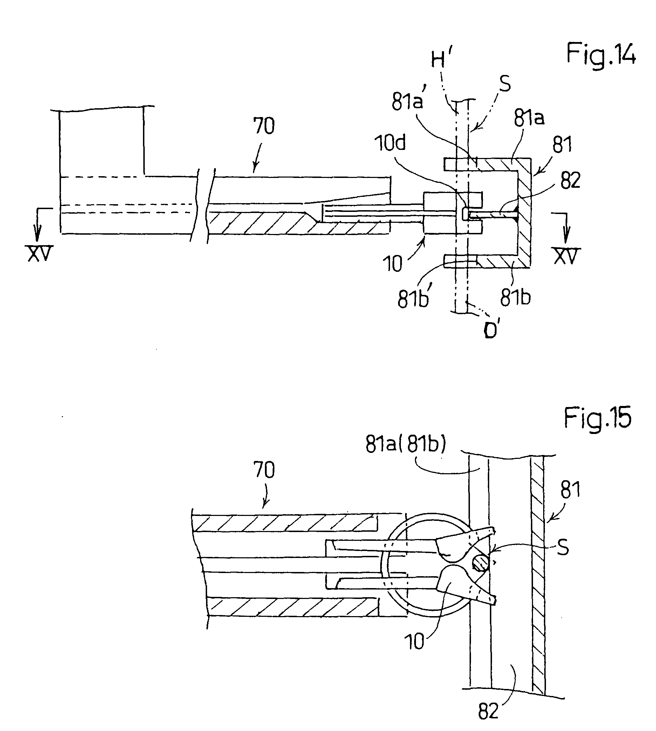

Fig. 14 is a sectional view showing a first embodiment of posture control means taken along lines XIV-XIV in Fig. 12 (b).

Fig. 15 is a sectional view taken along lines XV-XV in Fig. 14.

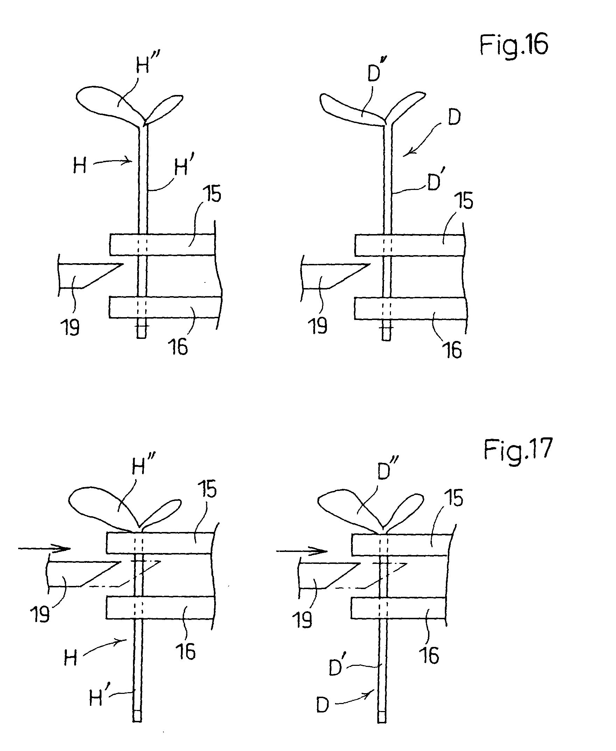

Fig. 16 is a view showing the state in which a scion sapling and a stock sapling are cut off from the root portion and lifted.

Fig. 17 is a view showing the state in which the stems of the scion sapling and stock sapling are cut obliquely.

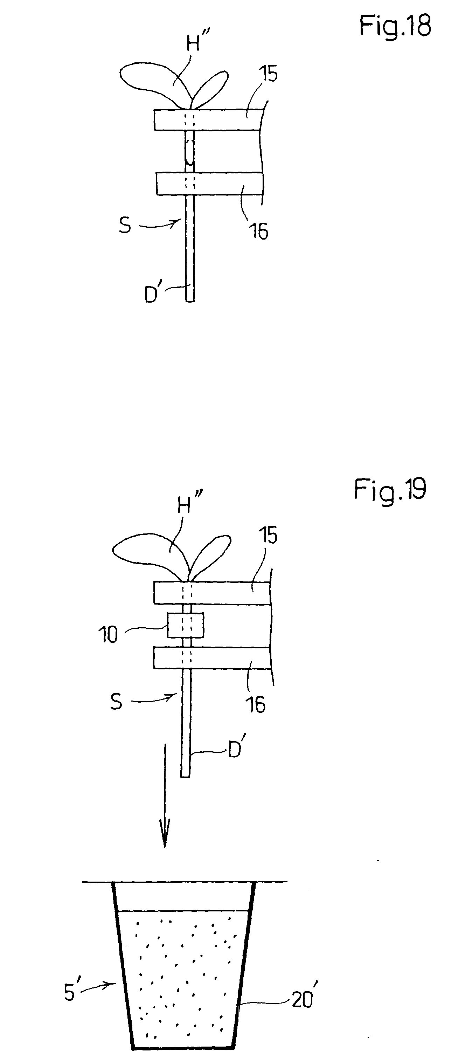

Fig. 18 is a view showing the state in which the cotyledon of the scion sapling and the stem of the stock sapling are joined.

Fig. 19 is a view showing a grafted sapling obtained by joining the cotyledon of the scion sapling and the stem of the stock sapling.

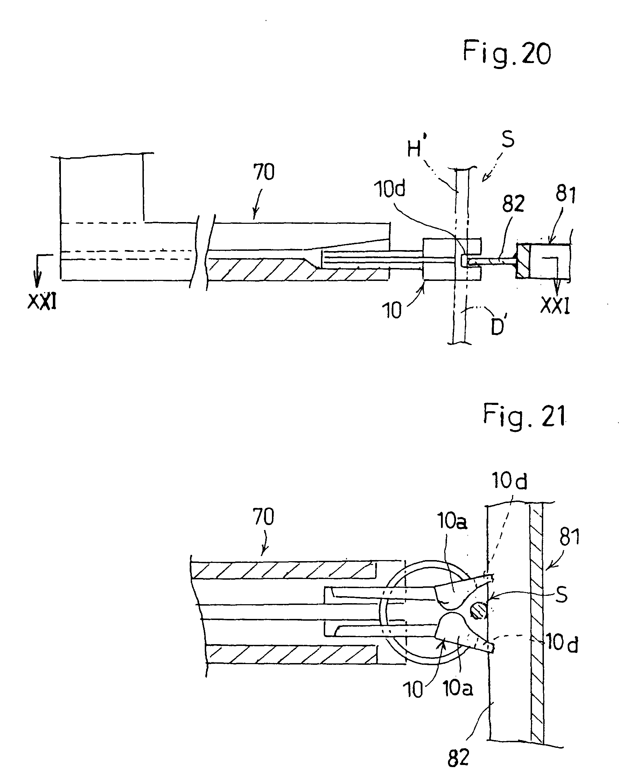

Fig. 20 is a sectional view showing a second embodiment of posture control means.

Fig. 21 is a sectional view taken along lines XXI-XXI in Fig. 20.

### BEST MODE FOR CARRYING OUT THE INVENTION

Preferred embodiments of the present invention will be described in specific detail referring to the accompanying drawings.

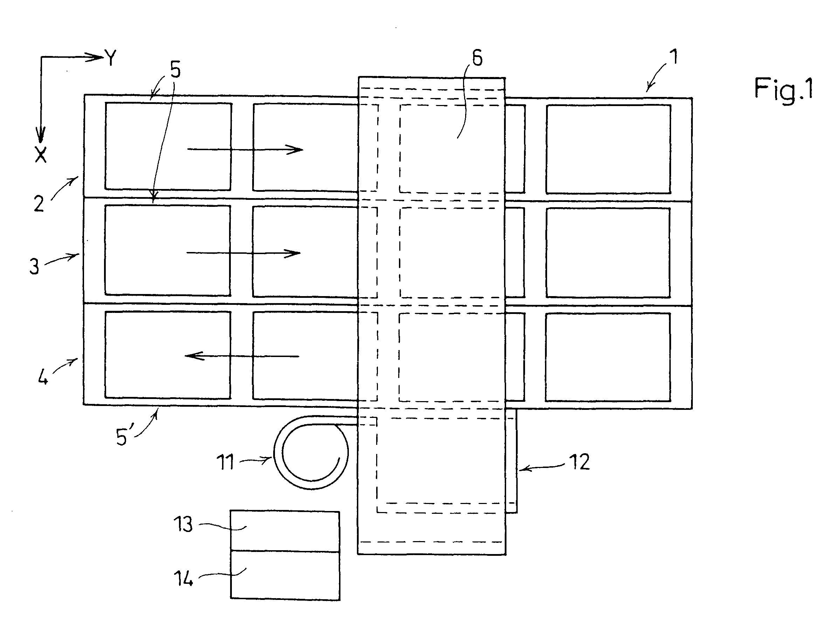

Referring to Fig. 1, a grafting apparatus 1 according to the present invention includes a scion transfer line 2, a stock transfer line 3, and a grafted sapling transfer line 4 disposed in parallel with each other, as viewed in plan. Each of the lines 2, 3 and 4 comprises a conventional transfer means such as a belt conveyor. On each of the scion transfer line 2 and the stock transfer line 3 is disposed an array of trays 5 each having pots 20 arranged in matrix (six rows in the direction of X and 12 rows in the direction of Y), as viewed in plan, for receiving a plurality of scion saplings H or stock saplings D, respectively. On the grafted sapling transfer line 4 is are arranged an array of trays 5' each having a matrix, as viewed in plan, of pots 20' containing nutritious soil.

In Fig. 1, the trays 5 are transferred in the direction of arrow Y intermittently at a pitch P1 corresponding to the distance between the pots 20 on the leftmost scion transfer line 2 and the middle stock transfer line 3. Various operations are performed under a gate-like frame 6 which is equipped with a clamp transfer mechanism 7, a cutting mechanism 8 and a clip transfer mechanism 9 or the like, as described hereinafter. A root portion of each stock sapling D and a tip portion of a respective scion sapling H are grafted together on the grafted sapling transfer line 4 to provide a grafted sapling S which is planted by sticking into the nutritious soil of a respective pot 20' in the tray 5'. Then, the grafted saplings S are transferred in the direction opposite to the transfer direction of the tray 5 in the transfer lines 2, 3 (opposite to the direction of the arrow Y) intermittently at the pitch P1.

The grafted sapling transfer line 4 is flanked by a waste box 12 below the gate-like frame 6 for collecting unnecessary cotyledons D" at the top of the stem D' of each stock sapling D. A clip feeder 11 is disposed near and above the waste box 12 for feeding clips to the clip transfer mechanism 9 one by one. Reference sign 13 designates a compressor 13 as a compressed air source for driving the mechanisms 7, 8 and 9 or the like, whereas reference sign 14 represents a central processing unit 14 such as an electric control circuit or the like for controlling the operations.

As described later in detail, the clamp transfer mechanism 7 includes upper and lower clamp means 15, 16 for simultaneously clamping the stems H' of six scion saplings H in each tray 5 on the scion transfer line 2 and the stems D' of six stock saplings D in each tray 5 on the stock transfer line 3. Of these clamp means, the underside of the lower clamp means 16 is provided with a root-cutting mechanism 80.

With the stems H' and D' clamped by the respective clamp means 15 and 16, the scion saplings H and the stock saplings D are cut under the lower clamp means 16 by the root-cutting mechanism 80. Then, an upper transfer frame 17 for holding the upper clamp means 15 and a lower transfer frame 18 for holding the lower clamp means 16 are elevated integrally to an appropriate height so that the scion saplings H and the stock saplings D clamped by the clamp means 15, 16 are raised simultaneously from the respective trays 5, as shown in Fig. 16. At this time, the root portions of the scion saplings H and stock saplings D together with the soil are left in respective trays 5. Subsequently, a cutter blade 19 of an oblique cutting mechanism 8 provided as a cutting means between the upper and lower clamp means 15, 16 is moved forward to obliquely cut the stem H' of a respective scion sapling H and the stem D' of a respective stock sapling D above the trays 5, as shown in Fig. 17.

Prior to such an oblique cutting operation, temporary loosening of the clamp means 15, 16 is effected with respect to the clamping of the stems H' of the scion saplings H and the stems D' of the stock saplings D.

As a result, the scion saplings H and the stock saplings D drop by their own weight until the cotyledons H", D" of the scion and stock saplings H, D contact the top surface of the upper clamp means 15. This allows the oblique cutting by the cutter blade 19 to be performed at a portion close to the cotyledon H" and D" even if the scion saplings H and the stock saplings D are clamped away from the cotyledon.

Then, the lower transfer frame 18 of the lower clamp means moves laterally by a distance L1 (corresponding to the one-line width) so that the stems H' of the scion saplings H are located above the tray 5 on the stock transfer line 3 while the stems D' of the stock saplings D are located above the tray 5 on the grafted sapling transfer line 4. Clamping of the stems H' of the scion saplings H is then released to drop and discard the stems H' into the tray 5 on the stock transfer line 3.

On the other hand, the upper transfer frame 17 of the upper clamp means 15 moves laterally by a distance L2 (twice the distance L1) so that the cotyledons H" of the scion saplings H are located above the tray 5' on the grafted sapling transfer line 4 while the cotyledons D" of the stock saplings D are located above the waste box 12. Clamping of the cotyledons D" of the stock saplings D is then released to drop and discard the cotyledons D" into the waste box 12.

Owing to the lateral movement of the upper transfer frame 17 of the upper clamp means 15 by the distance L2, the cotyledon H" of each scion sapling H and the stem D' of each stock sapling D are joined at the respective oblique cut surfaces above the grafted sapling transfer line 4, as shown in Fig. 18. In this state, the joint of the scion sapling H and the stock sapling D is fixedly clipped by each of the clips 10 loaded in advance in the clip transfer mechanism 9, thereby providing a grafted sapling S, as shown in Fig. 19. The clamp transfer mechanism 7 is then lowered to plant, by sticking, the grafted sapling S in the nutritious soil filled in a respective pot 20' in the tray 5' on the grafted sapling transfer line 4.

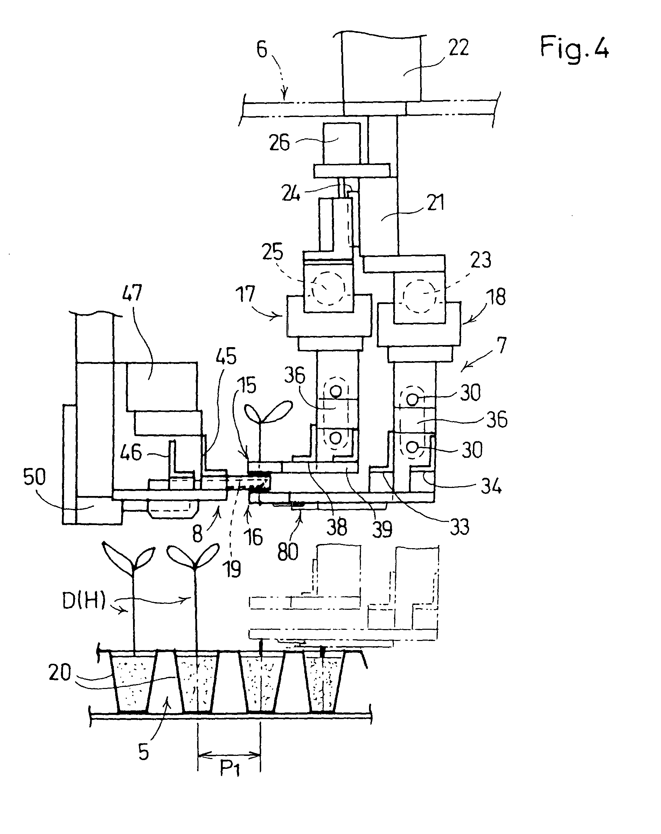

The structure of the clamp transfer mechanism 7 will be explained in detail with reference to Figs. 4 to 7. The clamp transfer mechanism 7A includes a lift frame 21 which is movable vertically relative to the upper surfaces of the scion transfer line 2 and the stock transfer line 3 by means of a first lift actuator 22 such as an air cylinder fixed on the upper surface of the gate-like frame 6. The lower transfer frame 18 is mounted on the lift frame 21 and is movable laterally by a first lateral actuator 23 such as an air cylinder by the distance L1, and the lower clamp means 16 having twelve clamping portions is mounted on the lower transfer frame 18.

The lift frame 21 has a front surface provided with a lift guide rail 24 for vertically guiding a second lateral actuator 25 such as an air cylinder which is moved up and down by a second lift actuator 26 such as an air cylinder fixed to the lift frame 21. The second lateral actuator 25 causes the upper transfer frame 17 together with the upper clamp means 15 having twelve clamping portions to move laterally by the distance L2.

As can be seen in Fig. 4, the base portions of the lower clamp means 16 for clamping the stems D' of the stock saplings D and the stems H' of the scion saplings H are located farther from the oblique cutting mechanism 8, whereas the base portions of the upper clamp means 15 for clamping the stems D' of the stock saplings D and the stem H' of the scion saplings H are located closer to the oblique cutting mechanism 8. The upper clamp means 15 comprises right-left pairs of support fingers 15a, 15b associated with a open-close mechanism, and the lower clamp means 16 similarly comprises right-left pairs of support fingers 16a, 16b associated with another open-close mechanism. Since the open-close mechanisms for both clamp means are identical in structure, the open-close mechanism for the lower clamp means 16 will be representatively described.

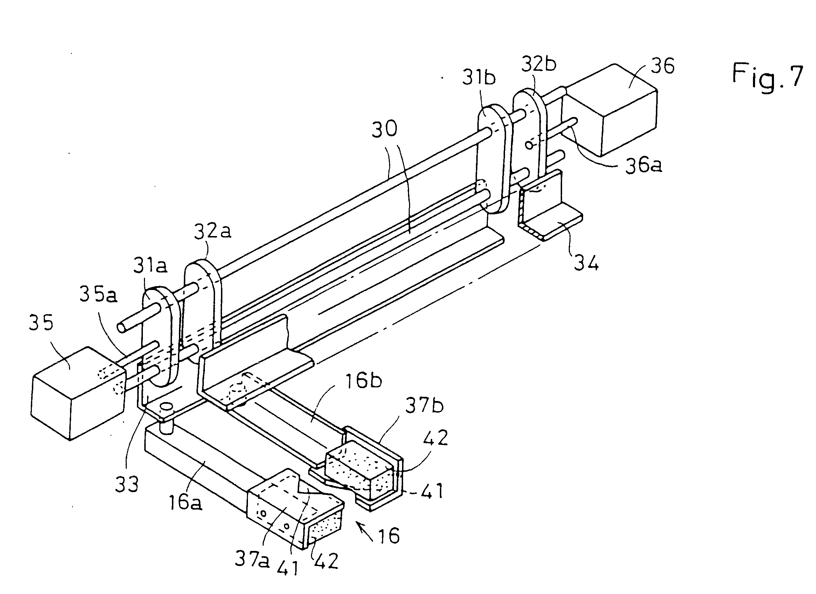

As shown in Fig. 7, the lower transfer frame 18 is provided with a vertically spaced pair of laterally elongated guide shafts 30 each of which supports a laterally spaced pair of slidable carriers 31a, 31b and another laterally pair of slidable carriers 32a, 32b for lateral movement. The pair of slidable carriers 31a, 31b are fixed to a lateral bar 33. The twelve left support fingers 16a of the lower clamp means 16 are mounted to the lateral bar 33 at a predetermined interval (P2). The other pair of slidable carriers 32a, 32b are fixed to another lateral bar 34. The twelve right support fingers 16b are attached to the lateral bar 34 at the same interval (P2).

As shown in Figs . 6 and 7, a open-close actuator 35 is mounted at the left end of the lower transfer frame 18 and has a piston rod 35a fixed to the slidable carrier 31a. On the other hand, another open-close actuator 36 is mounted at the right end of the lower transfer frame 18 and has a piston rod 36a fixed to the slidable carrier 32b.

With the above-described structure, when the piston rods 35a, 36a of the open-close actuators 35, 36 protract, the lateral bars 33, 34 move laterally so as to reduce the distance between the right and left support fingers 16a, 16b in each pair. As a result, each of the stems D', H' of the stock saplings D and the scion saplings H is clamped by a pair of nipping pieces 37a, 37b each at the tip end of a respective support fingers 16a, 16b.

Conversely, when the piston rods 35a, 36a are retracted, the lateral bars 33, 34 move laterally so as to increase the distance between the right and left support fingers 16a, 16b in each pair. As a result, the nipping pieces 37a, 37b at respective tip ends of the support fingers 16a, 16b are opened to release the stem.

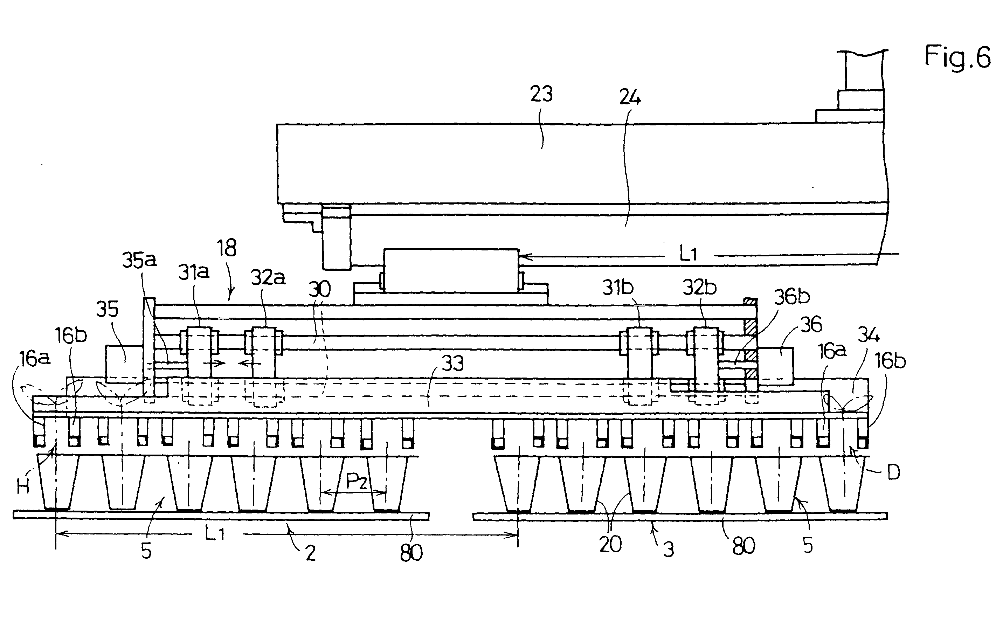

With regard to the upper transfer frame 17, similarly, the light and left support fingers 15a, 15b are moved laterally by means of lateral bars 38, 39 and open-close actuators 35, 36. Thus, each of the stems D' and H' of the stock saplings D and the scion saplings H is clamped or released by nipping pieces 40a, 40b each provided at the tip end of a respective support fingers. It is to be noted that the upper transfer frame 17 is omitted in Fig. 6.

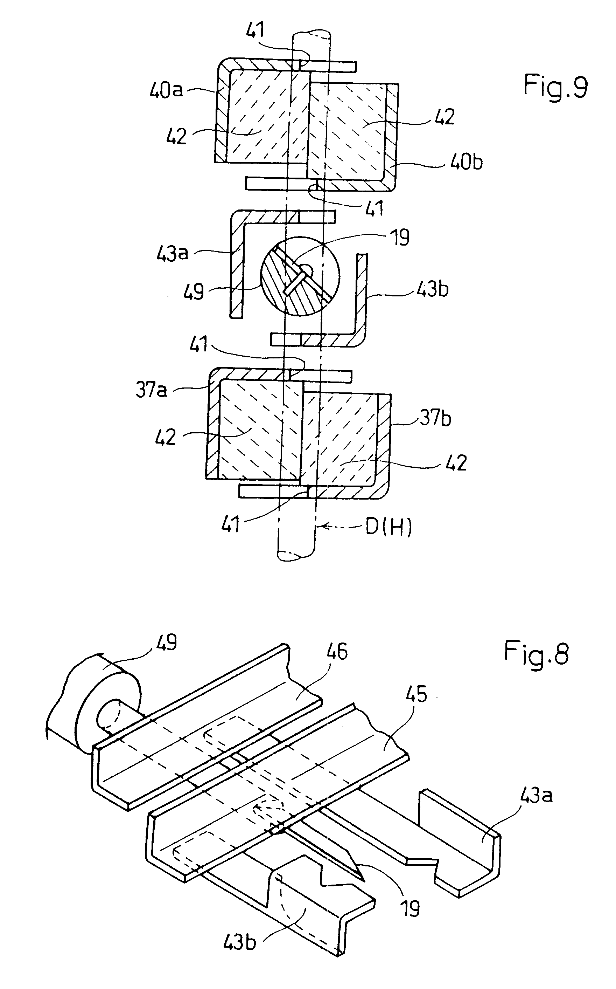

As shown in Figs. 7 and 9, each of the nipping pieces 37a, 37b is L-shaped in section. The nipping piece 37a, 37b has a horizontal plate portion formed at its inner edge with a V-shaped guide groove 41 for guiding and encircling the stem therein. A flexible elastic member 42 such as a sponge is attached to the nipping piece 37a, 37b for preventing damage to the stem at the time of clamping. Each of the nipping pieces 40a, 40b have the same structure.

Next, the oblique cutting mechanism 8 will be explained with reference to Figs. 4, 5, 8 and 9. Each cutter blade 19 of the oblique cutting mechanism 8 advances from an upstream side, as viewed in the transfer direction of the stock saplings D and scion saplings H, toward the clamp transfer mechanism 7 to approach a respective one of the stems D' and H'. Thus, the cutter blade 19 cuts the stem D', H', obliquely as shown in Fig. 9.

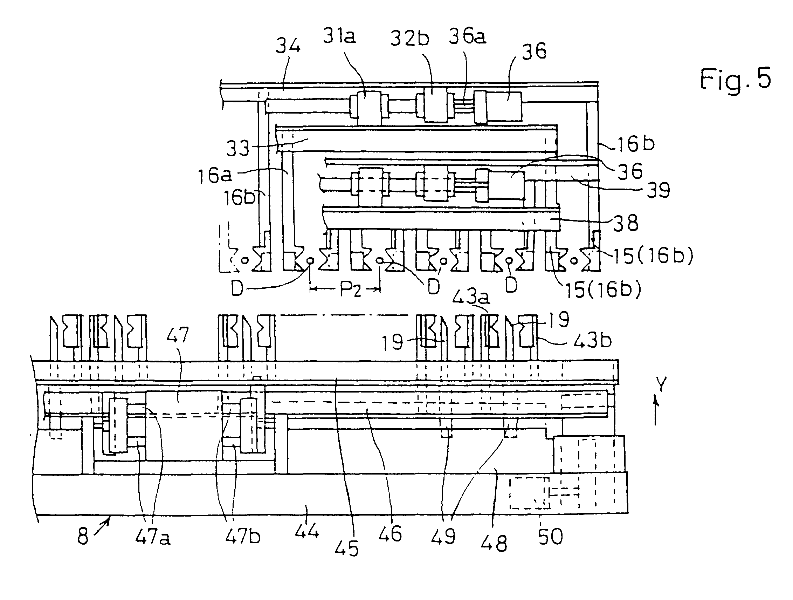

In simultaneously cutting the twelve scion and stock saplings D, H clamped and lifted to a predetermined height by the clamp transfer mechanism 7, each stem D', H' is positionally limited by a right-left pair of holding pieces 43a, 43b between the upper clamp means 15 and the lower clamp means 16 so that the stem D' , H' does not escape under the cutting force of the cutter blade 19. In this state, the cutter blade 19 is advanced in the direction of arrow Y in Fig. 5.

A cutting frame 44 is held at a fixed height relative to the gate-like frame 6. The cutting frame 44 supports a lateral bar 45 carrying the base portions of the twelve left holding pieces 43a and another lateral bar 46 carrying the base portions of the right holding pieces 43b for lateral movement. The cutting frame 44 is also fitted with a chucking actuator 47 such as an air cylinder which has leftwardly projecting piston rods 47a for connection to the lateral bar 46. The chucking actuator 47 also has rightwardly projecting piston rods 47b for connection to the lateral bar 45. Thus, when the piston rods 47a, 47b project, the distance between the left and right holding pieces 43a, 43b in each pair is reduced to clamp the stem of a respective sapling from both sides. Conversely, when the piston rods 43a, 43b are retracted, the distance between the holding pieces 43a, 43b in each pair is enlarged.

On the other hand, the cutting frame 44 further supports a support frame 48 which is movable reversibly forward (the arrow Y direction) and from which twelve cutter shanks 49 project at a constant pitch (P2). Each of the cutter shanks may comprise a round bar, a square bar, a plate or the like. The support frame 48 is moved (in the arrow Y direction) by means of a cutter actuator 50.

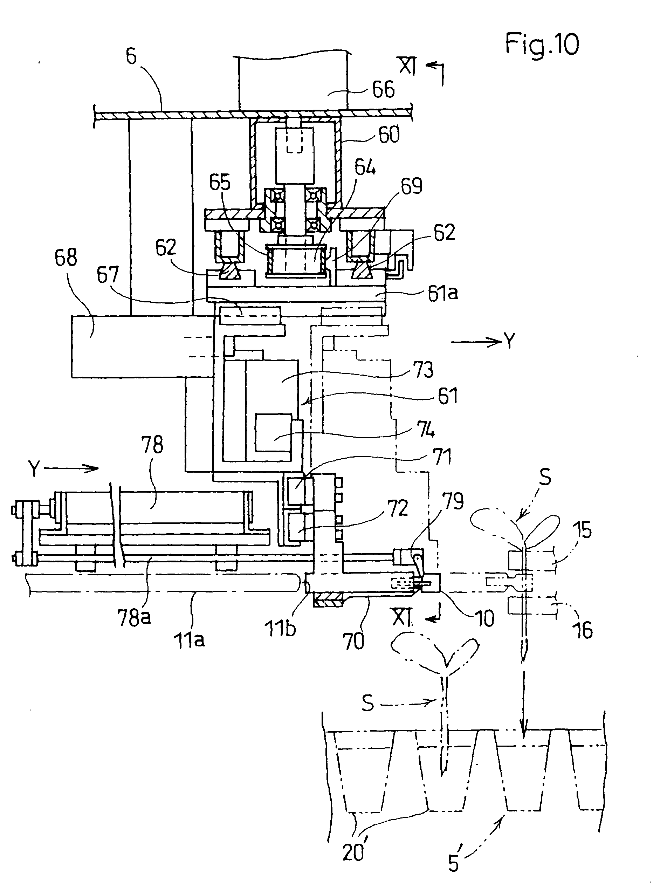

Next, the structure of the clip transfer mechanism 9 as a clip feeding means will be explained specifically with reference to Figs. 10 to 15.

The clip feeder 11, which may comprise a conventional oscillation-type parts feeder, is randomly loaded with clothespin-type clips 10 made of a synthetic resin. The clip feeder has an upwardly open feed path 11a in which the clips 10 are aligned in a line so that the paired stem nipping heads 10a of each clip is directed toward a feed port 11b with the handle portions 10b, 10b oriented backward (See Fig. 12 (a)). The clip has a ring spring 10c for constantly biasing the stem nipping heads 10a in the closing direction.

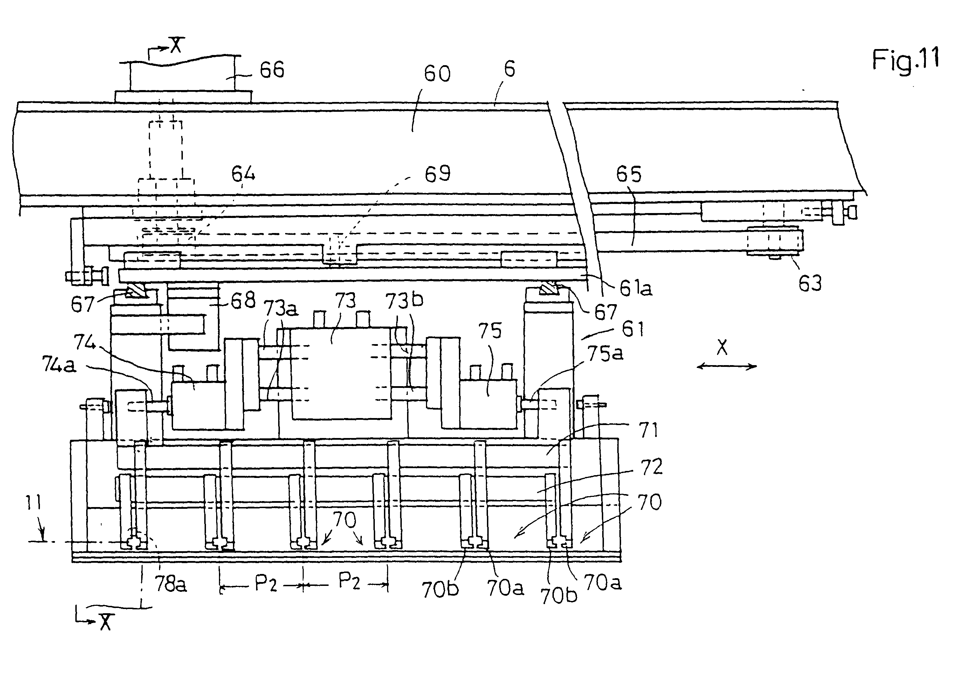

As shown in Figs. 10 and 11, the clip transfer mechanism 9 includes a support frame 60 which is mounted on the underside of the gate-like frame 6 and from which a movable frame 61 is suspended downward for movement in the directions of X and Y. Specifically, the underside of the support frame 60 is fixedly provided with guide rails 62 elongated in the X direction for laterally guiding (in the X direction) an upper suspension member 61a of the movable frame 61 in a suspended state. A timing belt 65 is wound around a driven pulley 63 and a drive pulley 64 under the support frame 60. The drive pulley 64 is driven by a reversibly rotatable step motor 66 fixed on the gate-like frame 6. The timing belt 65 is connected to the upper suspension member 61a by a connector 69.

The movable frame 61 is also movable back and forth (in the Y direction) in the suspended state along guide rails 67 mounted on the underside of the upper suspension member 61a. The movable frame 61 is connected to a piston rod (not shown) of a drive actuator 68 fixed on the underside of the gate-like frame 6. When the piston rod protracts, the movable frame 61 moves toward the front surface of the clamp transfer mechanism 7 (See the chain line in Fig. 10).

The movable frame 61 is provided with six clip holders 70 each comprising a pair of left and right hands 70a, 70b at the same pitch (P2) as the clamping portions of the upper and lower clamp means 15, 16.

The movable frame 61 supports a lateral bar 71 to which the base portions of the six right hands 70b are fixed, and a lateral bar 72 to which the base portions of the six left hands 70a are fixed. Both lateral bars are movable laterally relative to the movable frame.

Each of the hands 70a, 70b of each clip holder 70 is formed with an inwardly open guide groove 76 which is elongated in the Y direction. The ring spring 10c of each clip 10 is received in the guide groove 76 to keep the orientation. In this state, the stem nipping heads 10a at the tip end of the clip 10 can be moved to a holding portion 77.

A piston rod 78a of a clip-feed actuator 78 such as an air cylinder is disposed along the feed path lla. As will be discussed later, when each pair of left and right hands 70a, 70b held at a spacing P4 is located in front of the feed port 11b of the feed path 11a, a pushing member 79 provided at the tip end of the piston rod 78a pushes the clip 10 forward for transferring to the clip holder 70 (See Fig. 12 (a)).

The step motor 66 is actuated every time the transfer of a clip 10 to a clip holder 70 is completed. This causes the movable frame 61 as a whole to move intermittently laterally (in the X direction) at the pitch P2 for bringing another empty clip holder 70 to a position in front of the feed port 11b. By repeating such transfer of a clip 10 to a clip holder 70, all of the six clip holders 70 are supplied with a clip 10.

In this state, the movable frame 61 is moved greatly in the X direction toward the clamp transfer mechanism 7 wherein the oblique cut faces of the stock saplings D have been joined to those of the scion saplings H.

As shown in Fig. 11, a first clip actuator 73 such as an air cylinder fixed to the movable frame 61 has piston rods 73a projecting leftward for connection to a second clip actuator 74. The second clip actuator 74 has piston rods 74a for connection to the lateral bar 71. Further, the first clip actuator 73 also has piston rods 73b projecting rightward for connection to another second clip actuator 75 which has piston rods 75a for connection to the lateral bar 72.

When the piston rods 73a, 73b protract, the spacing between the left and right hands 70a, 70b is reduced to P3 (See Fig. 12 (b)). Accordingly, the spacing between the paired handle portions 10b of the clip 10 is reduced to keep the paired stem nipping heads 10a in an open state. Conversely, when the piston rods 73a, 73b are retracted, the spacing between the left and right hands 70a, 70b increases to P4 (See Fig. 12 (a)), so that the paired hands are ready for receiving a new clip 10 from the feed port 11b. In this open state of the paired hands, both of the second clip actuators 74, 75 are operated to retract their respective piston rods 74a, 75a. As a result, the spacing between the hands 70a, 70b increases to P5 (See Fig. 12 (c)), thereby causing the paired stem nipping heads 10a of the clip 10 to fixedly clamp the joint of the grafted sapling S. Conversely, when the piston rods 74a, 75a are protracted, the spacing between the hands 70a, 70b decrementally returns to P4 (See Fig. 12 (b)).

At the time of fixing the joint of the grafted sapling S as described above, a posture control means is caused to approach the joint from the side opposite to the clip 10. The posture control means engages the stems H', D' at the joint of the oblique cut faces of the stock sapling D and the scion sapling H, thereby regulating the posture of the joint.

According to the embodiment shown in Figs. 14 and 15, a bearing bar 81 made of a laterally open channel member is provided as a posture control means on the side (rear side) opposite to the clip 10 approaching the grafted sapling S. The bearing bar 81 has a vertically spaced pair of backup plates 81a, 81b provided with V-shaped grooves 81a', 81b' for supporting the stems H', D' from the back side.

Further, the bearing bar also has a joint support plate 82 provided between the backup plates 81a, 81b for supporting the back side of the joint.

Thus, the stem D' of the stock sapling D with the stem H' of the scion sapling H can be positioned to substantially form one line.

In this way, since posture control is performed to linearly align the stem D' of the stock sapling D with the stem H' of the scion sapling H in the vertical direction, the cut faces of the respective stems do not separate, and the overlapping area at the joint of the cut faces does not reduce. This enhances the grafting adhesion.

Further, at the time of fixing with the clip 10, the substantial linearity between the stems H', D' prevents the paired stem nipping heads 10a of the clip 10 from clipping the stems at an offset position. As a result, damage to the stems can be reliably reduced.

In the case where the joint support plate 82 is provided, the respective stem nipping heads 10a at the tip end of the clip 10 is formed, at a vertically intermediate portion, with a forwardly open groove 10d for receiving the joint support plate 82.

The vertical flat tip surface of the joint support plate 82 comes into abutment with the stems H', D' at the joint. Such abutment facilitates the linear alignment of the stems, thereby additionally enhancing the grafting adhesion.

As a variation of the above-described embodiment, the backup plates 81a, 81b and the V-shaped grooves 81a', 81b' of the bearing bar 81 may be eliminated, and the joint support plate 82 may project substantially horizontally from the tip end of the bearing bar 81 (See Figs. 20 and 21). The joint support plate 82 approaching the clip 10 in the opposite direction may be received in the groove 10d formed at the respective tips of the stem nipping heads 10a.

With such a variation, the tip of the joint support plate 82 can be brought very close to or partially overlap the paired stem nipping heads 10a, 10a of the clip 10 due to the provision of the groove 10d while the joint support plate 82 as the posture control means regulates the posture of the joint.

Therefore, the joint support plate 82 does not hinder the operation of fixing the stems with the clip 10. Further, since the tip of the joint support plate 82 can be kept in abutment with the back of the stems H', D' up to the last stage of fixing the stems with the clip 10, the active adhesion of the grafted sapling can be enhanced.

The tip of the clip 10 is provided by the paired stem nipping heads 10a for laterally clipping and fixing the stems at the joint, and each of the stem nipping heads is formed with the groove 10d at a vertically intermediate portion. Accordingly, both of the stems H', D' providing the joint can be laterally clipped simultaneously with the paired stem nipping heads 10a at the tip of the clip 10 which has been brought close to the stems until the joint support plate 82 is fitted in the groove 10d. Thus, the joint can be fixed to prevent separation, thereby additionally enhancing the adhesion of the grafted sapling.

Moreover, in the case where the joint support plate 82 alone is provided, the pairs of nipping pieces 40a, 40b and 42a, 42b can be positioned considerably close to the stem nipping heads 10a, 10a of the clip 10 thereabove and therebelow, respectively. As a result, the distance from the nipping position to the cut face can be shortened to reduce the degree of bending of the stems H', D' at the time of clipping.

The posture control means, or the joint support plate 82, or the bearing bar 81 made of a laterally open channel member with the joint support plate 82 is first brought close to the stems H', D' from behind in synchronism with the nipping and fixing with the clip 10 and thereafter brought backward upon completion of the fixing operation. Accordingly, the posture control means does not hinder subsequent lowering of the grafted saplings.

In summary, the upper and lower clamp means 15, 16 of the clamp transfer mechanism 7 clamp six scion saplings H and six stock saplings D, and then lift them upon cutting with the root cutting mechanism 80, thereby leaving their respective roots in trays 5. In this state, the clamping force is temporarily weakened to drop the scion saplings and stock saplings until their respective cotyledons H", D" contact the upper surface of the upper clamp means 15. Then, the stems H' of the scion saplings H and the stems D' of the stock saplings D are cut obliquely under the upper clamp means 15. After the stems H' of the scion saplings H and the cotyledons D" of the stock saplings D are then discarded, the cotyledons H" of the scion saplings H are joined to the stems D' of the stock saplings D by effecting relative lateral movement between the upper clamp means 15 and the lower clamp means 16. The joints are then fixed by the clips 10 to provide six grafted saplings S, which are thereafter planted in the nutritious soil in the respective pots 20' of the tray 5'. These operations are repeated.

According to the embodiments described above, the root portion of each stock sapling D is cut by the root-cutting mechanism 80 for discarding, and the cotyledon H" of each scion sapling H is grafted to the remaining stem D' of the stock sapling D.

However, the present invention is not limited to these embodiments but is of course applicable to the case in which the cotyledon H" cut from a scion sapling H is grafted to the stem D' of a stock sapling D obtained by cutting only the cotyledon D" thereof. For this purpose, the entire stock sapling D is lifted together with the pot for cutting off the cotyledon D" at the tip end and for subsequently joining to the cotyledon H" of the scion sapling H to provide a grafted sapling which is then transferred onto a tray disposed on the upper surface of the grafted sapling transfer line 4. In this case, the root-cutting mechanism 80 on the lower surface of the lower clamp means 16 in Fig. 4 may not be operated, or may be removed in advance.

## Claims

1. A method of grafting a sapling comprising:
a step of clamping a stem (H') of a scion sapling (H) with a scion sapling clamp means (15);
a step of cutting the clamped stem (H') of the scion sapling (H) below the scion sapling clamp means (15);
a step of clamping a stem (D') of a stock sapling (D) with a stock sapling clamp means (16);
a step of cutting the clamped stem (D') of the stock sapling (D) above the stock sapling clamp means (16);
a step of moving the scion sapling clamp means (15) and the stock sapling clamp means (16) relative to each other to join a cut face of the stem (H') of the scion sapling (H) to a cut face of the stem (D') of the stock sapling (D); and
a step of causing a clip (10) to approach the stems (H', D') transversely to a longitudinal axis thereof for fixing the joint of the stems (H', D');
characterised that the method further comprises a step of causing a posture control means (81) to approach the stems (H', D') in opposition to a clip approaching direction, and
a step of bringing the posture control means (81) into engagement with both of the stems (H', D') at the joint to regulate the joint in posture.

2. The sapling grafting method according to claim 1, wherein the clip (10) is formed with a groove (10d) for receiving a tip (82) of the posture control means (81), and wherein the step of fixing the stems (H', D') with the clip (10) is performed after the step of regulating the posture of the joint.

3. An apparatus for grafting a sapling comprising:
a scion sapling clamp means (15) for clamping a stem (H') of a scion sapling (H);
a cutting means (8) for cutting the clamped stem (H') of the scion sapling (H) below the scion sapling clamp means (15);
a stock sapling clamp means (16) for clamping a stem (D') of a stock sapling (D);
a cutting means (8) for cutting the clamped stem (D') of the stock sapling (D) above the stock sapling clamp means (16);
a transfer means (7) for moving the scion sapling clamp means (15) and the stock sapling clamp means (16) relative to each other to join a cut face of the stem (H') of the scion sapling (H) to a cut face of the stem (D') of the stock sapling (D); and
a clip feed means (11) for causing a clip (10) to approach the stems (H', D') transversely to a longitudinal axis thereof for fixing the joint of the stems (H', D');
characterised that the apparatus further comprises a posture control means (81) to approach the stems (H', D') in opposition to a clip approaching direction and to engage both of the stems at the joint.

4. The sapling grafting apparatus according to claim 3, wherein the posture control means (81) approaches the joint of the stems (H', D') into engagement therewith from behind before fixing with the clip (10), the posture control means (81) retreating from a tip of the clip (10) after fixing with the clip (10).

5. The sapling grafting apparatus according to claim 3 or 4, wherein the posture control means (81) comprises a plate (82) having a flat surface for engaging the joint of the stems (H', D') from behind.

6. The sapling grafting apparatus according to any one of claims 3 to 5, wherein the clip (10) has a tip formed with a groove (10d) for avoiding interference with the posture control means (81) when the posture control means (81) comes into engagement with the joint of the stems (H', D') from behind.

7. The sapling grafting apparatus according to any one of claims 3 to 6, wherein the clip (10) has a tip which comprises a pair of stem nipping heads (10a, 10b) for clamping the joint of the stems (H', D'), each of the stem nipping heads (10a, 10b) being formed with a forwardly open groove (10d).

## Patentansprüche

1. Verfahren zum Pfropfen eines Pflanzlings, umfassend:
einen Schritt eines Einspannens eines Stamms (H') eines Pfropfreises eines Pflanzlings (H) mit Pflanzling-Pfropfreis-Klemmmitteln (15);
einen Schritt eines Anschneidens des eingespannten Stamms (H') des Pflanzling-Pfropfreises (H) unterhalb der Pflanzling-Pfropfreis-Klemmmitteln (15);
einen Schritt eines Einspannens eines Stamms (D') einer Pflanzling-Unterlage (D) mit einem Pflanzling-Unterlagen-Klemmmittel (16);
einen Schritt eines Anschneidens des eingespannten Stamms (D') der Pflanzling-Unterlage (D) oberhalb der Pflanzling-Unterlagen-Klemmmittel (16);
einen Schritt eines Bewegens der Pflanzling-Pfropfreis-Klemmmittel (15) und der Pflanzling-Unterlagen-Klemmmittel (16) relativ zueinander, um eine Schnittfläche des Stamms (H') des Pflanzling-Pfropfreises (H) mit einer Schnittfläche des Stamms (D') der Pflanzling-Unterlage (D) zusammen zu fügen;
einen Schritt eines Veranlassens einer Klammer (10), sich für die Verbindung der Verbindungsstellen der Stämme (H', D') quer zu der Längsachse der Stämme (H', D') an die Stämme (H', D') anzunähern;
**gekennzeichnet durch**
das Verfahren weiterhin aufweisend, einen Schritt eines Veranlassens eines Haltungssteuerungsmittels (81), sich den Stämmen (H', D') in Gegenrichtung zu der Klammerannäherungsrichtung anzunähern, und
einen Schritt eines in Eingriff Bringens der Halterungssteuerungsmittel (81) mit beiden der Stämme (H', D') an der Verbindungsstelle, um die Haltung der Verbindungsstelle auszurichten.

2. Das Pfianzling-Pfropfverfehren nach Anspruch 1, wobei die Klammer (10) mit einer Nut (10d) für die Aufnahme einer Spitze (82) der Haltungssteuerungsmittel (81) ausgebildet ist und wobei der Schritt des Verbindens der Stämme (H', D') mit der Klammer (10) nach dem Schritt des Ausrichtens der Haltung der Verbindungsstelle vorgenommen wird.

3. Eine Vorrichtung zum Pfropfen eines Pflanzlings, umfassend:
ein Pflanzling-Pfropfreis-Klemmmittel (15) zum Einspannen eines Stamms (H') eines Pflanzling-Pfropfreises (H);
ein Schneidemittel (8) zum Schneiden des eingespannten Stamms (H') des Pflanzling-Pfropfreises (H) unterhalb der Pflanzling-Pfropfreis-Klemmmittel (15);
ein Pflanzling-Unterlagen-Klemmmittel (16) zum Einspannen eines Stamms (D') einer Pflanzling-Unterlage (D);
ein Schneidemittel (8) zum Schneiden des eingespannten Stamms (D') der Pflanzling-Unterlage (D) oberhalb der Pflanzling-Unterlagen-Klemmmittel (16);
ein Transfermittel (7) zum Bewegen der Pflanzling-Pfropfreis-Klemmmittel (15) und der Pflanzling-Unterlagen-Klemmmittel (16) relativ zueinander, um eine Schnittfläche des Stamms (H') des Pflanzling-Pfropfreises (H) mit einer Schnittfläche des Stamms (D') der Pflanzling-Unterlage (D) zusammen zu fügen; und
ein Zuführmittel (11) zur Veranlassung einer Klammer (10), sich quer zu der Längsachse der Stämme (H', D') hierzu anzunähern, um die Verbindungsstellen der Stämme (H', D') zu verbinden;
**dadurch gekennzeichnet,**
daß die Vorrichtung weiterhin ein Haltungssteuerungsmittel (81) aufweist, um sich in Gegenrichtung zu der Klammerannäherungsrichtung den Stämmen (H', D') anzunähern und mit beiden Stämmen an der Verbindungsstelle in Eingriff zu sein.

4. Die Pflanzling-Pfropfvorrichtung nach Anspruch 3, wobei die Haltungssteuerungsmittel (18) für den Eingriff mit den Stämmen (H', D') sich vor Befestigung der Klammer (10) der Verbindungsstelle der Stämme (H', D') von hinten annähern, die Haltungssteuerungsmittel (81) sich nach Befestigung der Klammer (10) von einer Spitze der Klammer (10) zurückziehen.

5. Die Pflanzling-Pfropfvorrichtung nach Anspruch 3 oder 4, wobei die Haltungssteuerungsmittel (81) eine Platte (82) aufweisen, die eine ebene Oberfläche für den Eingriff von hinten mit der Verbindungsstelle der Stämme (H', D') hat.

6. Die Pflanzling-Pfropfvorrichtung nach einem der Ansprüche 3 bis 5, wobei die Klammer (10) eine Spitze hat, die mit einer Nut (10d) zur Vermeidung einer Beeinflussung der Haltungssteuerungsmittel (81), wenn die Haltungssteuerungsmittel (81) von hinten in den Eingriff mit der Verbindungsstelle der Stämme (H', D') kommen, ausgebildet ist.

7. Die Pflanzling-Pfropfvorrichtung nach einem der Ansprüche 3 bis 6, wobei die Klammer (10) eine Spitze hat, die ein Paar von Stammklemmköpfen (10a, 10b) zum Einspannen der Verbindungsstelle der Stämme (H', D') hat, jeder der Stammklemmköpfe (10a, 10b) mit einer nach vorne geöffneten Nut (10d) ausgebildet sind.

## Revendications

1. Procédé de greffage d'une plantule comprenant :
une étape de blocage d'une tige (H') d'un greffon (H), avec un moyen de blocage de greffon (15) ;
une étape de coupe de la tige bloquée (H') du greffon (H), au-dessous du moyen de blocage de greffon (15) ;
une étape de blocage d'une tige (D') d'un sujet (D), avec un moyen de blocage de sujet (16) ;
une étape de coupe de la tige bloquée (D') du sujet (D), au-dessus du moyen de blocage de sujet (16) ;
une étape de déplacement du moyen de blocage de greffon (15) et du moyen de blocage de sujet (16) l'un par rapport à l'autre de manière à joindre une face coupée de la tige (H') du greffon (H) à une face coupée de la tige (D') du sujet (D) ; et
une étape d'amenée d'une pince (10) près des tiges (H', D') transversalement à leur axe longitudinal, pour fixer la jonction des tiges (H', D') ;
caractérisé en ce que le procédé comprend en outre :
une étape de commande d'un moyen de réglage de posture (81) de sorte qu'il s'approche des tiges (H', D') en opposition à une direction d'approche de pince ; et
une étape d'amenée du moyen de réglage de posture (81) en contact avec les deux tiges (H', D') à l'endroit de la jonction pour régler la posture de la jonction.

2. Procédé de greffage de plantule selon la revendication 1, dans lequel la pince (10) comporte une rainure (10d) pour recevoir une extrémité (82) du moyen de réglage de posture (81), et dans lequel l'étape de fixation des tiges (H', D') avec la pince (10) est effectuée après l'étape de réglage de la posture de la jonction.

3. Dispositif de greffage d'une plantule comprenant :
un moyen de blocage de greffon (15) pour bloquer une tige (H') d'un greffon (H) ;
un moyen de coupe (8) pour couper la tige bloquée (H') du greffon (H), au-dessous du moyen de blocage de greffon (15) ;
un moyen de blocage de sujet (16) pour bloquer une tige (D') d'un sujet (D) ;
un moyen de coupe (8) pour couper la tige bloquée (D') du sujet (D), au-dessus du moyen de blocage de sujet (16);
un moyen de transfert (7) pour déplacer le moyen de blocage de greffon (15) et le moyen de blocage de sujet (16) l'un par rapport à l'autre de manière à joindre une face coupée de la tige (H') du greffon (H) à une face coupée de la tige (D') du sujet (D) ; et
un moyen de distribution de pince (11) pour approcher une pince (10) des tiges (H', D') transversalement à leur axe longitudinal afin de fixer la jonction des tiges (H', D') ;
caractérisé en ce que le dispositif comprend en outre un moyen de réglage de posture (81) qui s'approche des tiges (H', D') en opposition à une direction d'approche de pince et qui vient en contact avec les deux tiges à l'endroit de la jonction.

4. Dispositif de greffage de plantule selon la revendication 3, dans lequel le moyen de réglage de posture (81) s'approche de la jonction des tiges (H', D') et vient en contact avec celles-ci par l'arrière, avant la fixation avec la pince (10), le moyen de réglage de posture (81) s'éloignant d'une extrémité de la pince (10) après la fixation avec la pince (10).

5. Dispositif de greffage de plantule selon la revendication 3 ou 4, dans lequel le moyen de réglage de posture (81) comprend une plaque (82) ayant une surface plate pour venir en contact avec la jonction des tiges (H', D') par l'arrière.

6. Dispositif de greffage de plantule selon une quelconque des revendications 3 à 5, dans lequel la pince (10) présente une extrémité comportant une rainure (10d) pour éviter une interférence avec le moyen de réglage de posture (81) lorsque le moyen de réglage de posture (81) vient en contact avec la jonction des tiges (H', D') par l'arrière.

7. Dispositif de greffage de plantule selon une quelconque des revendications 3 à 6, dans lequel la pince (10) présente une extrémité qui comprend une paire de têtes de pincement de tige (10a, 10b) pour serrer la jonction des tiges (H', D'), chacune des têtes de pincement de tige (10a, 10b) comportant une rainure ouverte vers l'avant (10d).
